# EUROPÄISCHE PATENTSCHRIFT

(11) **EP 0 325 151 B1**
(45) Veröffentlichungstag und Bekanntmachung des Hinweises auf die Patenterteilung: **03.03.1993**
(21) Anmeldenummer: 89100375.8
(22) Anmeldetag: 11.01.1989
(51) Int. Cl.: A22C 13/00

(54) **Verpackungsfolie, insbesondere Wursthülle, auf Basis von Polyamid**
Packaging foils, especially sausage casings, based on polyamide
Feuilles d'emballage, spécialement enveloppes de saucisses, à base de polyamides

(30) Priorität: 19.01.1988 DE 3801344
(43) Veröffentlichungstag der Anmeldung: 26.07.1989
(73) Patentinhaber: HOECHST AKTIENGESELLSCHAFT, 65926 Frankfurt am Main (DE)
(72) Erfinder: Stenger, Karl, D-6220 Rüdesheim (DE); Strutzel, Hans, D-6200 Wiesbaden (DE); Crass, Günther, D-6204 Taunusstein 4 (DE)

(56) Entgegenhaltungen:
- EP-A- 0 065 278
- EP-A- 0 176 980

## Beschreibung

Die Erfindung bezieht sich auf eine biaxial streckorientierte Verpackungsfolie, insbesondere schlauchförmige künstliche Wursthülle, bestehend aus einem Polymergemisch auf Basis von Polyamiden und üblichen Additiven, umfassend (A) lineares aliphatisches Polyamid als Hauptkomponente, insbesondere Polyamid 6, (B) Polyterephthalsäureester, insbesondere Polybutylenterephthalat, (C) wenigstens ein weiteres Polymer und (D) Farbstoffe.
Aus der EP-A-0 176 980 (= US-A-4,659,599) ist bereits eine Wursthülle bekannt geworden, die aus einer Polymermischung der genannten Komponenten (A) und (B) besteht und auch Farbstoff enthalten kann. Durch den Zusatz des Polyesters sollen die für die Verwendung als Wursthülle erforderlichen Festigkeits- und Dehneigenschaften des Polyamidschlauches verbessert werden.

Zur Herstellung von gefärbten Kunststoffolien wird der Farbstoff bekanntlich in Form eines Masterbatches dem Kunststoffgranulat vor dem Extrudieren hinzugefügt, wobei zur intensiven Farbgebung Konzentrationen von etwa 1 bis 10 %, bezogen auf die Kunststoffmenge, erforderlich sind. Bei der Herstellung von gefärbten Schläuchen aus der bekannten Polymermischung von Polyamid und Polyester hat sich nun gezeigt, daß bei Zusatz gewisser Farbpigmente in Konzentrationen von größer als etwa 1 %, bezogen auf die Gesamtmenge, große Schwierigkeiten auftreten. Der nach der Extrusion erhaltene Vorschlauch enthält Klumpen, die auf eine ungleichmäßige Verteilung der Farbpigmente zurückzuführen sind. Es kommt zur Bildung von Löchern in der Folie. Die Weiterverarbeitung des Vorschlauches im nachfolgenden Streckprozeß ist häufig nicht möglich. Er läßt sich selbst bei großer Krafteinwirkung nicht verstrecken und neigt zum Platzen.
Ein Ausweg aus diesen Problemen besteht darin, entweder relativ geringe Mengen an Farbstoff einzusetzen und auf ausreichend deckende Farbgebungen zu verzichten oder auf andere Farbstoffe auszuweichen, was aber häufig wegen der begrenzten Zahl an geeigneten Farbstoffen ebenfalls keine Alternative darstellt. Viele Farbstoffe sind für die Verpackung von Lebensmitteln ungeeignet oder sollten aus der Sicht des Umweltschutzes nicht verwendet werden. Andere sind nicht ausreichend hitzestabil und zersetzen sich bei der Extrusion der Kunststoffschmelze. Zur Umgehung dieser Schwierigkeiten wird anstelle der Einfärbung der Polymermasse vor der Extrusion die fertiggestellte Folie vollflächig mit der gewünschten Farbe bedruckt.

In der DE-C-27 16 710 sind in einem Stufenstreckprozeß biaxial gestreckte Folien aus Polyamidgemischen beschrieben worden, die ein lineares aliphatisches Polyamid als Hauptkomponente und als eine mögliche weitere Komponente ringhaltige Polyamide enthalten können. Diese ringhaltigen Polyamide sind aus drei verschiedenen Strukturen aufgebaute Copolymere. Beispiele für diese Strukturen sind Einheiten aus aromatischem Diamin, insbesondere Xylylendiaminreste, oder aromatischer Dicarbonsäure, wie Terephthalsäure. Auch die EP-A-0 065 278 betrifft eine Folie aus einem Polyamidgemisch, wobei die eine Komponente ein teilaromatisches Polyamid und die andere ein lineares aliphatisches Polyamid wie Polyamid 6 oder Polyamid 66 ist. Im teilaromatischen Polyamid besitzen entweder die Diamin- oder die Dicarbonsäure-Einheiten aromatische Struktur. Als Beispiel wird ein Kondensat aus 2,2,4- und 2,4,4-Trimethylhexamethylendiamin und Terephthalsäure genannt. Eine Anregung, wie die vorstehend genannten Probleme gelöst werden können, ist diesen beiden Druckschriften nicht zu entnehmen.

Es ist somit Aufgabe der vorliegenden Erfindung, die aufgezeigten Probleme, die bei der Herstellung von Schlauchfolien aus Farbpigmenten enthaltenden Polyamid-Polyester-Mischungen auftreten, zu beseitigen. Die Farbpigmente sollen sich - auch bei größerer Konzentration - in weitgehend homogener Mischung in die Polymermischung einarbeiten lassen, und die erhaltene extrudierte Vorfolie soll einwandfrei biaxial streckbar sein.

Diese Aufgabe wird überraschenderweise gelöst durch die in Anspruch 1 angegebene Kombination aus der bekannten Polyamid-Polyester-Mischung mit dem als Komponente (C) bezeichneten aromatischen Polyamid sowie durch das in den Ansprüchen 6 und 7 genannte Masterbatch.

Ein biaxial streckorientierter Kunststoffschlauch, der auch Farbstoff enthalten kann, aus einer Trägerfolie von Polyamid/Polyester mit einem zusätzlichen weiteren Polymeren, nämlich Polyolefin wie Polyethylen und Polypropylen, wurde zwar schon beschrieben (DE-U-87 08 867.8).

Dieses Polyolefin hat aber dort die Aufgabe, in Kombination mit festen anorganischen Teilchen eine Vakuolenstruktur in der Folie auszubilden, wodurch die Folie ein perlmuttartig oder metallisch glänzendes Aussehen erhalten soll.

Erfindungsgemäß bildet das lineare aliphatische Polyamid, das auch aus einer Mischung von Polymeren dieser Art bestehen kann, die Hauptkomponente des Polymergemisches, aus dem die Verpackungsfolie besteht. Sein Anteil beträgt etwa 65 bis 85 Gew.-%, bezogen auf das Foliengewicht. Als lineares aliphatisches Polyamid eignen sich insbesondere Polyamide der allgemeinen Formel

⁅ NH - CO - (CH₂)ₓ - CO - NH-(CH₂)_{y} ⁆ ,

in der x und y eine Zahl von 2 bis 7 bedeuten, wobei das Polyamid mit x = y = 6 (Polyamid 6,6) bevorzugt ist, oder Polyamide der allgemeinen Formel

⁅ NH - (CH₂)_{z} - CO ⁆ ,

in der z eine Zahl von 4 bis 12 bedeutet, wobei 6 (Polycaprolactam, Nylon 6) und 12 (Polyamid 12) bevorzugt sind.

Für die Extrusion der Schlauchfolie sollte die relative Viskosität des Polyamids im Bereich von etwa 2,5 bis 4,5, gemessen in Schwefelsäure (96 %ig/20°C), liegen.

Der Anteil des in der Polymermischung vorhandenen Polyesters, der ebenfalls aus verschiedenen Polyestern bestehen kann, beträgt etwa 7 bis 15 Gew.-%, bezogen auf das Foliengewicht. Bezogen auf die Polyamidmenge liegt der Polyesteranteil vorzugsweise im Bereich von etwa 8 bis 14 %. Der Polyterephthalsäureester ist ein Kondensationsprodukt von aliphatischen Diolen der Formel HO-(CH₂)_{n-OH} (n = 2 - 6, vorzugsweise n = 4) mit Terephthalsäure und gegebenenfalls geringen Mengen Isophthalsäure und/oder aliphatischen Dicarbonsäuren.

Das erfindungswesentliche aromatische Polyamid ist in einer Menge von 4 bis 19 Gew.-%, bezogen auf das Foliengewicht vorhanden, wobei sich sein Anteil nach der Menge des zugegebenen Farbstoffs richtet und nicht wesentlich kleiner sein sollte als der Gewichtsanteil des Farbstoffs. Im allgemeinen wird zur Erzielung des angestrebten Erfolgs mindestens die gleiche Menge wie der Farbstoff, sicherheitshalber aber eine größere Menge als die Farbstoffmenge in der Polymermischung eingesetzt.
Das aromatische Polyamid enthält Einheiten, die auf Diamine und Dicarbonsäure zurückgehen, wobei im wesentlichen nur die Diamine, vorzugsweise jedoch im wesentlichen nur die Dicarbonsäuren aromatische Kerne aufweisen. Als aromatisches Diamin ist vor allem Xylylendiamin, insbesondere m-Xylylendiamin, geeignet, welches mit aliphatischer Dicarbonsäure mit 5 bis 11 C-Atomen, insbesondere Adipinsäure, polykondensiert ist. Das bevorzugte aromatische Polyamid besteht aus Einheiten von Terephthalsäure und Isophthalsäure, die mit verzweigten linearen aliphatischen Diaminen, insbesondere mit mindestens 7 C-Atomen, polykondensiert sind. Aromatische Polyamide mit unverzweigten linearen aliphatischen Diamin-Einheiten, wie z.B. Hexamethylendiamin-Einheiten, sind nicht geeignet, um den angestrebten Effekt zu erreichen.

In bevorzugter Ausführungsform bestehen diese verzweigten aliphatischen Diamin-Einheiten aus alkylsubstituierten Hexamethylendiamin-Einheiten, wobei die Gesamtzahl der C-Atome der Alkylgruppen mindestens 3 ist. Somit bestehen die Alkylgruppen mindestens aus drei Methylgruppen oder einer Äthyl- und einer Methylgruppe oder einer Propyl-, insbesondere Isopropylgruppe. Die Methyl- und Äthylgruppen befinden sich vorteilhaft in 2- und 4-Stellung. Ist nur eine Alkylgruppe vorhanden, befindet sie sich gewöhnlich in der 3-Stellung. Daraus ergeben sich beispielsweise die folgenden Variationsmöglichkeiten für den alkylsubstituierten Hexamethylendiamin-Rest:

⁅ NH - CH₂ - CR¹R² - CHR⁵ - CR³R⁴ - CH₂ - CH₂ - NH ⁆

| | | |
|---|---|---|
| I | R¹ = R³ = R⁵ = H; | R² = C₂H₅; R⁴ = CH₃; |
| II | R¹ = R³ = R⁵ = H; | R² = CH₃ ; R⁴ = C₂H₅; |
| III | R¹ = R⁵ = H ; | R² = R³ = R⁴ = CH₃; |
| IV | R³ = R⁵ = H ; | R¹ = R² = R⁴ = CH₃; |
| V | R¹ = R² = R³ = R⁴ = H; | R⁵ = CH(CH₃)₂ oder Butyl. |

Die Diamineinheiten I und II oder III und IV sind gegebenenfalls als Isomerengemische in der Polymerkette vorhanden. Die alkylsubstituierten Hexamethylendiamin-Einheiten bilden zusammen mit Terephthalsäure-Einheiten das aromatische Polyamid. Bei dem aromatischen Polyamid handelt es sich um an sich bekannte weitgehend amorphe Verbindungen (vgl. Chimia, 21, 1967, Seite 65-81), aus denen auch schon hochtransparente Folien hergestellt wurden (DD-PS 56 924).

Der in der Polymermasse der Folie homogen verteilte Farbstoff besteht aus Verbindungen, die für die Schmelzextrusion ausreichend hitzestabil sind und die im Zusammenhang mit Lebensmitteln problemlos eingesetzt werden können. Vorzugsweise werden Farbpigmente eingesetzt, die tiefschwarze oder brillantrote Anfärbungen ergeben. Hierzu gehören insbesondere Farbmittelzubereitungen auf Basis von Perylen- und Chinacridonverbindungen und Farbrußpigmente. Diese Farbmittel wirken nukleierend, d.h. sie erhöhen die kristalline Struktur der Polyamidfolie und führen ohne den Zusatz des aromatischen Polyamids zu den eingangs geschilderten Problemen bei der Herstellung der Schlauchfolie.

Der Farbstoff wird der Polymermasse vor der Extrusion als Masterbatch zugesetzt. Er läßt sich auf diese Weise selbst bei höheren Konzentrationen gleichmäßig in die Polyamidschmelze dispergieren. Das Masterbatch besteht aus einer Mischung des aromatischen Polyamids und den Farbstoffpigmenten.

Unter dem Begriff Masterbatch ist im Rahmen der vorliegenden Erfindung eine vorzugsweise granulatförmige Stamm-Mischung zu verstehen, die aus einem weitgehend staubfreien Konzentrat des aromatischen Polyamids mit relativ hohem Anteil an Farbstoff besteht. Diese Stamm-Mischung wird als Zwischenprodukt verwendet. Sie wird mit der farbstoffreien granulatförmigen Polymermischung aus aliphatischem Polyamid und Polyester vor dem Extrudieren vermischt, um daraus die Schlauchfolie mit der gewünschten Farbstoffmenge herzustellen.

Das erfindungsgemäß eingesetzte Masterbatch ist ein Kunststoffgranulat, dessen Hauptanteil, vorzugsweise 60 bis 95, insbesondere 70 bis 93 Gew.-%, aus dem aromatischen Polyamid, insbesondere aus den in Anspruch 2 bis 5 genannten Verbindungen, und dessen restlichen Anteile aus Farbstoffpigment, insbesondere aus Rotpigmenten und/oder Rußpigmenten, bestehen. Dieses Granulat ist zweckmäßigerweise zylinder- oder linsenförmig ausgebildet. Das Masterbatch kann auch zusätzliche Additive wie Antioxidantien, Antistatika, Füllstoffteilchen und/oder Stabilisatoren in der jeweils wirksamen Menge enthalten.

Das Masterbatch wird vor dem Einfüllen der gesamten Polymermischung in den Extruder in einer derartigen Menge zu dem farbpigmentfreien Granulat der Polymermischung aus (A) aliphatischem Polyamid und (B) Polyterephthalsäureester zugemischt, daß der gewünschte Gewichtsanteil an Farbpigment und aromatischen Polyamid in der Folie realisiert wird.

Die extrudierte Kunststoffschmelze läßt sich nach dem Abschrecken als schlauchförmige Vorfolie (Primärschlauch) durch Aufblasen und Wegziehen simultan in Längs- und Querrichtung ohne Probleme verstrecken. Die Strecktemperatur liegt im Bereich von 65 bis 85°C. Das Längsstreckverhältnis beträgt üblicherweise mindestens 1:2,5, das Querstreckverhältnis mindestens 1:2,8. An die multiaxiale Streckung schließt sich gewöhnlich die Thermofixierung bei mindestens 90°C an, die z.B. mit heißer Luft durchgeführt wird. Bei dieser Hitzebehandlung wird der orientierte Zustand fixiert, so daß die Schlauchfolie bei späterer Wärmebehandlung, wie es bei der Wurstherstellung üblich ist, ausreichend dimensionsstabil ist. Die Schlauchfolie ist gegebenenfalls mehrschichtig ausgebildet. Die Polymermischung bildet dann die Trägerschicht, die weiteren Schichten dienen beispielsweise der Verbesserung spezieller Eigenschaften der Schlauchfolie, wie z.B. die Erhöhung der Gasundurchlässigkeit oder Siegelfähigkeit. Die Schlauchfolie hat eine Wandstärke von etwa 10 bis 50, insbesondere 25 bis 45 Mikrometer, und einen für die Herstellung von Würsten üblichen Durchmesser. Zur Verpackung von pastösen Lebensmitteln, insbesondere zum Einpressen von Wurstmasse, wird die Schlauchfolie in einseitig verschlossenen Abschnitten oder in geraffter Form eingesetzt. Die Schlauchfolie hat zylinderförmige Gestalt und ist in ihrer Längenausdehnung entweder geradlinig oder zu einem Kranzdarm gebogen. Bei der Behandlung der mit Wurstmasse gefüllten Verpackungsfolie mit heißem Wasser bleibt der gleichmäßige Querschnitt der Folie erhalten. Nach dem Abkühlen erhält man prall gefüllte, faltenfreie Würste. Die Verpackungsfolie zeigt ausgezeichnete Deformationsbeständigkeit bei Einwirkung von heißem Wasser und elastisches Rückdehnungsvermögen, um sich eng an das abgekühlte Füllgut anlegen zu können.

### Die Erfindung wird anhand der nachfolgenden Beispiele näher erläutert:

### Beispiel 1

Es wurde ein aus 90 Gew.-% aromatischem Polyamid in Granulatform und 10 Gew.-% Rußpigment hergestelltes Masterbatch eingesetzt. Das aromatische Polyamid ist aufgebaut aus Terephthalsäure-Einheiten und Diamin-Einheiten der Formel

⁅ NH - CH₂ - C(CH₃)₂ - CH₂ - CH(CH₃) - CH₂ - CH₂ - NH ⁆

und

⁅ NH - CH₂ - CH(CH₃) - CH₂ - C(CH₃)₂ - CH₂ - CH₂ - NH ⁆

wobei die beiden isomeren Diamineinheiten im Gew.-Verhältnis von 1:1 vorliegen.

| | |
|---|---|
| Ein Dryblend aus 80 Gew.-% | Polyamid 6 (Granulat) |
| 10 Gew.-% | Polybutylenterephthalat (Granulat) |
| 10 Gew.-% | Masterbatch |

wurde als Schmelze durch eine Ringschlitzdüse extrudiert und zu einem Vorschlauch mit einem Kaliber von 13 mm abgekühlt. Der Vorschlauch wurde auf Strecktemperatur erwärmt und mit Hilfe eines Gaspolsters im Schlauchinnern ohne Probleme simultan biaxial gestreckt. Der Streckprozeß lief kontinuierlich und störungsfrei ab. Die erhaltene Schlauchhülle zeigte ein Kaliber von 44 mm an und war mit einem Rußgehalt von 1 % gleichmäßig tiefschwarz gefärbt.

### Beispiel 2

20 Gew.-Tl. eines Masterbatches, hergestellt aus 80 Gew.-% des aromatischen Polyamids des Beispiels 1 in Granulatform und 20 Gew.-% eines roten Farbpigments
(PV-Echtrot, Herst. Hoechst) wurden mit

| | |
|---|---|
| 70 Gew.-Tl. | Polyamid 6 und |
| 10 Gew.-Tl. | Polybutylenterephthalat |

gemischt und in der Schmelze durch eine Ringschlitzdüse extrudiert. Der erhaltene Vorschlauch zeigte ein Kaliber von 13 mm. Er wurde, wie in Beispiel 1, auf Strecktemperatur erwärmt und mit Hilfe eines Gaspolsters im Schlauchinnern ohne Probleme simultan biaxial gestreckt. Der Streckungsprozeß verlief kontinuierlich und störungsfrei. Die erhaltene kräftig signalrotgefärbte Schlauchhülle hatte ein Schlauchkaliber von 44 mm. Die Farbpigmente waren im Schlauchmaterial homogen verteilt.

### Vergleichsbeispiele

Es wurden analog den Beispielen 1 und 2 Polymermischungen der folgenden Zusammensetzung durch eine Ringdüse extrudiert und der erhaltene Vorschlauch abgekühlt.

| | | |
|---|---|---|
| 1. | 89 Gew.-Tl. | Polyamid 6 (Granulat) |
| | 7,6 Gew.-Tl. | Polybutylenterephthalat (Granulat) |
| | 3,4 Gew.-Tl. | Masterbatch, bestehend aus 70 Gew.-% Polyester in Granulatform und 30 Gew.-% Rußpigment |
| 2. | 86,6 Gew.-Tl. | Polyamid 6 (Granulat) |
| | 10 Gew.-Tl. | Polybutylenterephthalat (Granulat) |
| | 3,4 Gew.-Tl. | Masterbatch, bestehend aus 70 Gew.-% Polyamid 6 in Granulatform und 30 Gew.-% Rußpigment |
| 3. | 80 Gew.-Tl. | Polyamid 6 (Granulat) |
| | 10 Gew.-Tl. | Polybutylenterephthalat (Granulat) |
| | 10 Gew.-Tl. | Masterbatch, bestehend aus 60 Gew.-% Polyamid 6 in Granulatform und 40 Gew.-% Rotpigment |

Die aus diesen Polymermischungen erhaltenen schlauchförmigen Vorschläuche konnten in keinem Fall verstreckt werden. Dies dürfte auf eine starke kristallisationsfördernde Wirkung der verwendeten Farbpigmente zurückzuführen sein. Durch die Verwendung des aromatischen Polyamids als Matrix für das Farbpigment enthaltende Masterbatch wurde anscheinend die Kristallisationsneigung herabgesetzt, die Dispergierung der Farbpigmente in der Folie erleichtert und dadurch erst eine höhere Konzentration der Farbpigmente möglich.

## Patentansprüche

1. Schlauchförmige, biaxial streckorientierte Verpackungsfolie, insbesondere künstliche Wursthülle, bestehend aus einem Polymergemisch auf Basis von Polyamiden und üblichen Additiven, umfassend
(A) lineares aliphatisches Polyamid als Hauptkomponente, insbesondere Polyamid 6,
(B) Polyterephthalsäureester, insbesondere Polybutylenterephthalat,
(C) wenigstens ein weiteres Polymer
(D) Farbstoffe,
dadurch gekennzeichnet, daß das Polymergemisch aus
(a) 65 bis 85 Gew.-% des aliphatischen Polyamids,
(b) 7 bis 15 Gew.-% des Polyterephthalsäureesters,
(c) 4 bis 19 Gew.-% eines aromatischen Polyamids, aufgebaut aus Einheiten von verzweigten aliphatischen Diaminen mit mindestens 7 C-Atomen und aromatischen Dicarbonsäuren, insbesondere Terephthalsäure und/oder Isophthalsäure, oder aus Einheiten von aromatischen Diaminen, insbesondere Xylylendiamin, und aliphatischer Dicarbonsäure mit 5 bis 11 C-Atomen, insbesondere Adipinsäure, und
(d) 0,5 bis 10 Gew.-% Farbstoff besteht,
wobei der Gewichtsanteil des aromatischen Polyamids vorzugsweise gleich, insbesondere größer ist als der Gewichtsanteil des Farbstoffs.

2. Verpackungsfolie nach Anspruch 1, dadurch gekennzeichnet, daß die Einheiten des verzweigten aliphatischen Diamins der Komponente (C) aus alkylsubstituierten Hexamethylendiamin-Einheiten bestehen, wobei die Gesamtzahl der C-Atome aller Alkylgruppen mindestens drei beträgt.

3. Verpackungsfolie nach Anspruch 2, dadurch gekennzeichnet, daß die Hexamethylendiamin-Einheiten mit Methyl-, Äthyl- und/oder Propylresten substituiert sind.

4. Verpackungsfolie nach Anspruch 3, dadurch gekennzeichnet, daß die Hexamethylendiamin-Einheiten in 2- und 4-Stellung mit mindestens 3 Methylgruppen oder mindestens einer Methyl- und einer Äthylgruppe substituiert sind.

5. Verpackungsfolie nach Anspruch 3, dadurch gekennzeichnet, daß die Hexamethylendiamin-Einheiten in 3-Stellung mit wenigstens einer Äthyl-, Propyl- oder Butyl-Gruppe substituiert sind.

6. Zur Herstellung der Verpackungsfolie nach Anspruch 1 geeignetes Masterbatch, bestehend aus granulatförmigen Kunststoffteilchen als Hauptkomponente und Farbstoffpigment, dadurch gekennzeichnet, daß die Kunststoffteilchen aus dem aromatischen Polyamid nach einem der Ansprüche 1 bis 5 bestehen.

7. Masterbatch nach Anspruch 6, dadurch gekennzeichnet, daß das Farbpigment aus Rußpigment besteht.

## Claims

1. A tubular, biaxially stretch-oriented packaging film, in particular an artificial sausage casing, comprised of a polymer blend based on polyamides and customary additives, said blend comprising
(A) a linear, aliphatic polyamide as the main component, in particular polyamide-6,
(B) a polyterephthalic acid ester, in particular polybutylene terephthalate,
(C) at least one further polymer; and
(D) dyes,
characterized in that the polymer blend comprises
(a) 65 to 85 % by weight of the aliphatic polyamide,
(b) 7 to 15 % by weight of the polyterephthalic acid ester,
(c) 4 to 19 % by weight of an aromatic polyamide comprised of units of branched aliphatic diamines having at least 7 carbon atoms and aromatic dicarboxylic acids, in particular terephthalic acid and/or isophthalic acid, or of units of aromatic diamines, in particular xylylene diamine, and aliphatic dicarboxylic acid having 5 to 11 carbon atoms, in particular adipic acid, and
(d) 0.5 to 10 % by weight of dye,
whereby the weight amount of the aromatic polyamide is preferably equal to, and particularly preferably greater than, the weight amount of the dye.

2. A packaging film as claimed in claim 1, characterized in that the units of the branched aliphatic diamine of component (C) are alkyl-substituted hexamethylene diamine units whereby the total number of carbon atoms contained in all alkyl groups is at least three.

3. A packaging film as claimed in claim 2, characterized in that the hexamethylene diamine units are substituted with methyl, ethyl and/or propyl groups.

4. A packaging film as claimed in claim 3, characterized in that the hexamethylene diamine units are substituted in the 2- and 4-position with at least three methyl groups or at least one methyl and one ethyl group.

5. A packaging film as claimed in claim 3, characterized in that the hexamethylene diamine units are substituted in the 3-position with at least one ethyl, propyl or butyl group.

6. A masterbatch suitable for the production of the packaging film as claimed in claim 1, comprising granular plastic particles as the main component and a dye pigment, characterized in that the plastic particles consist of the aromatic polyamide as claimed in any of claims 1 to 5.

7. A masterbatch as claimed in claim 6, characterized in that the colored pigment is a carbonblack pigment.

## Revendications

1. Film d'emballage tubulaire orienté biaxialement par étirage, en particulier boyau artificiel de saucisse, composé d'un mélange de polymères à base de polyamides et d'additifs usuels comprenant
(A) un polyamide aliphatique linéaire comme composant principal, en particulier du Polyamide 6,
(B) un poly(ester d'acide téréphtalique), en particulier du poly(téréphtalate de butylène),
(C) au moins un autre polymère,
(D) des colorants,
caractérisé en ce que le mélange de polymères comprend
(a) 65 à 85 % en poids du polyamide aliphatique,
(b) 7 à 15 % en poids du poly(ester d'acide téréphtalique),
(c) 4 à 19 % en poids d'un polyamide aromatique, constitué de motifs de diamines aliphatiques ramifiées comportant au moins 7 atomes de carbone et d'acides dicarboxyliques aromatiques, en particulier d'acide téréphtalique et/ou d'acide isophtalique, ou bien de motifs de diamines aromatiques, en particulier de xylylènediamine, et d'acides dicarboxyliques aromatiques en C₅₋₁₁, en particulier d'acide adipique, et
(d) 0,5 à 10 % en poids de colorant,
la proportion pondérale du polyamide aromatique étant de préférence égale, en particulier supérieure, à la proportion pondérale de colorant.

2. Film d'emballage selon la revendication 1, caractérisé en ce que les motifs de la diamine aliphatique ramifiée du composant (C) comprennent des motifs hexaméthylènediamine substitués par des groupes alkyle, le nombre total des atomes de carbone de tous les groupes alkyle étant d'au moins 3.

3. Film d'emballage selon la revendication 2, caractérisé en ce que les motifs hexaméthylènediamine sont substitués par des groupes méthyle, éthyle et/ou propyle.

4. Film d'emballage selon la revendication 3, caractérisé en ce que les motifs hexaméthylènediamine sont substitués en positions 2 et 4 par au moins 3 groupes méthyle ou au moins un groupe méthyle et un groupe éthyle.

5. Film d'emballage selon la revendication 3, caractérisé en ce que les motifs hexaméthylènediamine sont substitués en position 3 par au moins un groupe éthyle, propyle ou butyle.

6. Mélange maître approprié pour la fabrication du film d'emballage selon la revendication 1, comprenant des particules granulaires de matière synthétique, comme composant principal, et un pigment coloré, caractérisé en ce que les particules de matière synthétique consistent en le polyamide aromatique de l'une quelconque des revendications 1 à 5.

7. Mélange maître selon la revendication 6, caractérisé en ce que le pigment coloré est un pigment de noir de carbone.
